**Europäisches Patentamt**

**European Patent Office**

**Office européen des brevets**

(19)

(11) Veröffentlichungsnummer: **0 078 373**
**B1**

(12) **EUROPÄISCHE PATENTSCHRIFT**

(45) Veröffentlichungstag der Patentschrift:
**10.12.86**

(51) Int. Cl.⁴: **G 01 N 3/38**

(21) Anmeldenummer: **82107465.5**

(22) Anmeldetag: **17.08.82**

(54) **Vorrichtung zur Durchführung thermomechanischer Analysen.**

(30) Priorität: **22.09.81 DE 3137603**

(43) Veröffentlichungstag der Anmeldung:
**11.05.83 Patentblatt 83/19**

(45) Bekanntmachung des Hinweises auf die Patenterteilung:
**10.12.86 Patentblatt 86/50**

(84) Benannte Vertragsstaaten:
**CH DE FR GB LI**

(56) Entgegenhaltungen:
**DE - A - 1 943 749**
**DE - B - 1 287 334**

**JOURNAL OF SCIENTIFIC INSTRUMENTS (JOURNAL OF PHYSICS E), Band 2, Nr. 3, Serie 2, Seiten 282-283, London, GB. T. R. THOMAS et al.: "Cryostat for imposing compressive forces on contacts using an electromagnet"**
**IBM TECHNICAL DISCLOSURE BULLETIN, Band 17, Nr. 10, März 1975, Seiten 3011-3012, New York, USA. J. AHN et al.: "Force cell for determination of surface/thin film mechanical properties"**
**FARBE UND LACK, Band 86, Nr. 7, 1980, Seiten 591-594, Hannover, DE. Dr. K.-H.W. REICHERT et al.: "Eine modifizierte Form der thermomechanischen Analyse zur Messung der temperaturabhängigen Eigenschaften von Anstrichfilmen"**

(73) Patentinhaber: **Bodenseewerk Perkin-Elmer & Co. GmbH, Alte Nussdorfer Strasse 15 Postfach 1120, D-7770 Überlingen/Bodensee (DE)**

(84) Benannte Vertragsstaaten: **CH DE GB LI**

(73) Patentinhaber: **THE PERKIN-ELMER CORPORATION, Main Avenue, Norwalk Connecticut 06856 (US)**

(84) Benannte Vertragsstaaten: **FR**

(72) Erfinder: **Kunze, Wolfgang, Pommernstrasse 60, D-6054 Rodgau 6 (DE)**
Erfinder: **Schweckendieck, Bernd, Fliederstrasse 18, D-6114 Gr. Umstadt (DE)**

(74) Vertreter: **Weisse, Jürgen, Dipl.-Phys. et al, Patentanwälte Dipl.-Phys. Jürgen Weisse Dipl.-Chem. Dr. Rudolf Wolgast Bökenbusch 41 Postfach 11 03 86, D-5620 Velbert 11 Langenberg (DE)**

**Beschreibung**

Die Erfindung betrifft eine Vorrichtung zur Durchführung thermomechanischer Analysen, bestehend aus einem in vertikaler Richtung geführten Belastungskörper und einer Kompensationseinrichtung für dessen Eigengewicht, aus einer Probenaufnahme, in der der Belastungskörper der zu untersuchenden Probe aufliegt und die mit einer Begasungseinrichtung versehen ist, aus einer Temperiereinrichtung für die Probenaufnahme, aus einem mit dem Belastungskörper unverschieblich verbundenen Magnetkörper und einem damit zusammenwirkenden, elektromagnetischen Positionssignalgeber, der durch eine Justiereinrichtung in eine Nullage einstellbar ist und an dessen Ausgang ein der Auslenkung des Magnetkörpers aus der Nullage entsprechendes Messsignal anliegt, aus einem mit dem Belastungskörper verbundenen Teller zur Aufnahme eines Gewichts zur statischen Belastung der Probe, aus einer mit dem Belastungskörper kombinierbaren Einrichtung zur dynamischen Belastung der Probe, die aus einem an eine Wechselstromquelle anschliessbaren Elektromagneten und einem Anker besteht, und aus einer Aufzeichnungsvorrichtung zur Aufzeichnung der Messsignale als Funktion der Temperatur.

Vorrichtungen dieser Art dienen zur Untersuchung des mechanischen Verhaltens beispielsweise von Kunststoffen wie aus Kunststoffen gebildeten Lackfilmen als Funktion der Belastung und Temperatur. Dabei wird zweckmässig ein Temperaturbereich von weit unterhalb der Glastemperatur bis nahe an die Erweichungstemperatur erfasst. Bei statischer Belastung wird je nach Höhe der Belastung die Ausdehnung der Probe oder die Eindringtiefe des Probenstempels (Penetration), bei dynamischer Belastung zusätzlich auch die elastische, die plastische und die bleibende Verformung der Probe gemessen. Die Kenntnis dieser Daten ist für die Untersuchung der mechanischen Eigenschaften von z.B. Lacken von Bedeutung.

Bei einer bekannten Vorrichtung dieser Art (K.-H.W. Reichert, G. Dönnebrink; «eine modifizierte Form der thermomechanischen Analysen zur Messung der temperaturabhängigen Eigenschaften von Anstrichfilmen»; farbe + lack 86 (1980) Heft 7, S. 591) bildet der Belastungskörper einen Probenstempel, dessen eines Ende einer Probe in einem Probenaufnahmerohr anliegt und dessen anderes Ende eine Gewichtschale trägt, mittels derer die Probe statisch mit einem Gewicht belastet werden kann. Das Probenaufnahmerohr ist mit einer Begasungseinrichtung und mit einer Kühleinrichtung und die Probe mit einem Thermoelement versehen. Der Probenstempel ist in einer Führung geführt und trägt einen Magnetkörper in Form eines Tauchankers, der mit einer den Positionssignalgeber bildenden, axial verstellbaren Messspule zusammenwirkt, die den Tauchanker umgibt und einen Wegaufnehmer bildet, dessen Ausgangssignale die Ausschwenkungen des Tauchankers aus einer Nullage anzeigen und mit einem Schreiber registriert werden. Eine Kompensationsfeder dient zur Kompensation des Eigengewichtes des Probenstempels. Bei der bekannten Vorrichtung kann die Probe gegebenenfalls auch dynamisch belastet werden. Dazu wird auf die Gewichtsschale der Anker eines Elektromagneten aufgesetzt. Unter dem Einfluss eines Elektromagneten, der mittels eines Funktionsgenerators nach einer auswählbaren, periodischen Zeitfunktion erregbar ist, führt der Anker periodische Schwingungen aus, die sich als wechselnde Be- und Entlastungsimpulse an der Probe auswirken. Das Schwingungsverhalten des Probenstempels wird von den mechanischen Eigenschaften der Probe und der Temperatur beeinflusst und mittels des Schreibers aufgezeichnet.

Die bekannte Vorrichtung erfordert beim Übergang von der statischen zur dynamischen Belastung einen Wechsel der Belastungseinrichtung. Dabei ist nach jedem Austausch der Belastungseinrichtung eine Neujustierung der Messspule erforderlich, die sich durch die Änderung des Eigengewichtes des Belastungskörpers ergibt. Darüber hinaus muss dafür gesorgt werden, dass der Anker und der Elektromagnet zueinander möglichst die gleiche Ausgangsposition einnehmen, da sonst die Belastungen unter Umständen nicht vergleichbar sind. Dabei ist auch noch darauf zu achten, dass der Wirkungsbereich der Kompensationsfeder eingehalten und in dem auf die Probe einwirkenden Belastungsbereich nicht überschritten wird, damit Messfehler vermieden werden.

Durch die DE-B-1 943 749 ist ein Analysengerät mit einem an einer Probe anliegenden Fühler bekannt, bei dem der Fühler im wesentlichen gewichtslos in Kontakt mit der Probe ist. Die Probe befindet sich in einem Kältebad und kann programmgesteuert beheizt werden. Der Fühler ist an dem der Probe entgegengesetzten Ende mit einem Gewicht statisch belastbar und enthält einen ferromagnetischen Körper, der mit einem Differentialtransformator zusammenwirkt. Ein Schwimmerkörper aus Polypropylen ist mit dem Fühler verbunden und taucht in eine Auftriebsflüssigkeit (Fluorcarbonöl) in einem Behälter, so dass der Fühler von seinem Eigengewicht entlastet ist.

Die Aufgabe der Erfindung besteht dementsprechend darin, eine Vorrichtung der eingangs genannten Art zu schaffen, die ohne Umbauten sowohl zu statischen als auch zu dynamischen thermomechanischen Messungen verwendet werden kann.

Erfindungsgemäss wird diese Aufgabe dadurch gelöst, dass der Belastungskörper schwimmend gelagert ist und der Anker des Elektromagneten unverschieblich mit dem Belastungskörper verbunden ist, und dass der Anker zwischen dem Magnetkörper und Winkelarmen an dem Belastungskörper angeordnet ist und der Elektromagnet in einer fixen Position in bezug auf den Positionssignalgeber, aber gemeinsam mit diesem justierbar angeordnet ist.

Bei der erfindungsgemässen Vorrichtung sind der Magnetkörper des Positionssignalgebers und der Anker des Elektromagneten gleichermassen an dem Belastungskörper unverschieblich befestigt. Das bedeutet zunächst, dass für den Übergang von der statischen zur dynamischen Belastung keine Umbauten erforderlich sind. Das bedeutet weiterhin, dass die Justierung stets für beide Belastungsarten gleichzeitig vorgenommen wird. In diesem Zusammenhang ist die schwimmende Lagerung des Belastungskörpers von besonderer Bedeutung, da durch diese Art der Lagerung unter allen Umständen ein Ausgleich für das Eigengewicht des Belastungskörpers besteht.

Vorteilhafte Ausgestaltungen der Vorrichtung nach der Erfindung sind in Unteransprüchen gekennzeichnet. Die fixe Einstellung des Elektromagneten gegenüber dem Positionssignalgeber ist dabei insofern vorteilhaft, als sie eine gleichzeitige Justierung des Positionssignalgebers und des Elektromagneten gestattet, wodurch die Justierung erheblich vereinfacht und erleichtert wird, da es ausreicht, die Justierung an einem der beiden Teile vorzunehmen. Zweckmässigerweise ist dazu ein längliches, an beiden Enden geschlossenes und darin mit Durchführungen für den Belastungskörper versehenes Gehäuse für den Positionssignalgeber vorgesehen und an dem der Probe abgewandten Ende des Gehäuses ein Träger für den Elektromagneten angebracht.

Von besonderem Vorteil ist, dass der Anker des Elektromagneten aus einem vormagnetisierten Magnetwerkstoff besteht. Dadurch wird erreicht, dass bei der dynamischen Belastung unabhängig von der Hysterese stets Linearität zwischen dem Stromfluss durch den Elektromagneten und der erzeugten, auf den Belastungskörper bzw. die Probe einwirkenden Kraft besteht.

Ein Ausführungsbeispiel der Erfindung ist in den Abbildungen dargestellt und wird nachfolgend anhand der Bezugszeichen im einzelnen erläutert und beschrieben.

Es zeigen

Fig. 1 eine schematische Darstellung der erfindungsgemässen Vorrichtung und

Fig. 2 eine Schnittansicht der auf den Belastungskörper zur Durchführung der Messung einwirkenden Teile in der Vorrichtung nach Fig. 1.

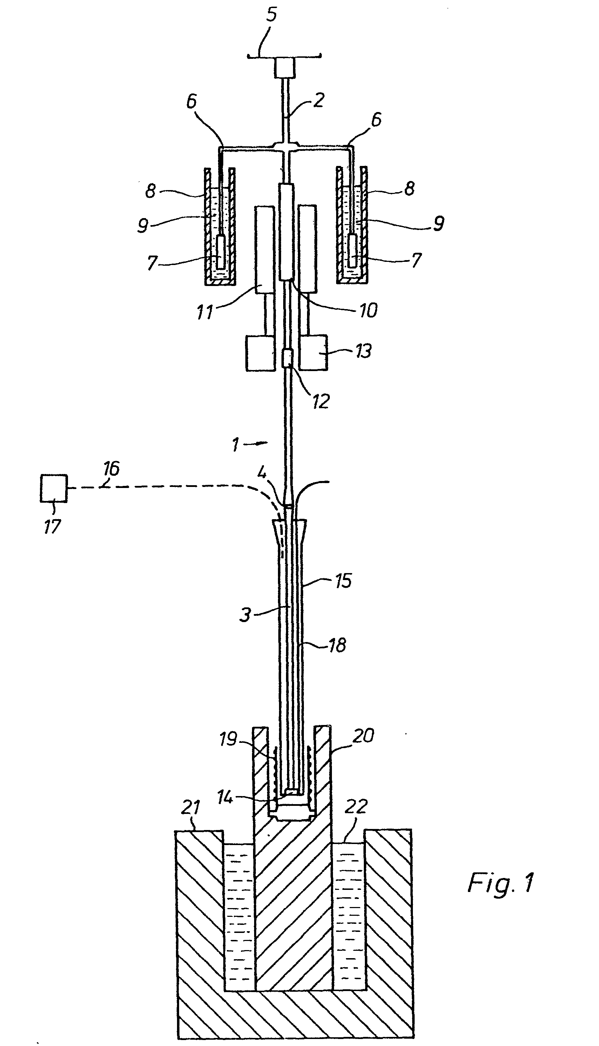

In der schematischen Darstellung von Fig. 1 besteht der Belastungskörper 1 aus einem Oberteil 2 und einem Unterteil 3, die durch eine Gewindekupplung 4 lösbar miteinander verbunden sind. Das Oberteil 2 trägt an seinem freien Ende einen Teller 5, der bei statischer Belastung zur Aufnahme eines Belastungsgewichtes dient. Darunter gehen von dem Oberteil 2 drei Winkelarme 6 nach beiden Seiten des Belastungskörpers 1 aus, die an ihren abgewinkelten Enden einen Tauchkörper 7 tragen, der sich jeweils in einem von einer Kammer 8 mit einer Ölfüllung 9 gebildeten Tauchbad befindet. Unterhalb der Winkelarme 6 ist an dem Oberteil 2 ein Anker 10 befestigt, der mit einem Elektromagneten 11 zusammenwirkt. Der Anker 10 besteht aus einem vormagnetisierten Magnetwerkstoff; solche Magnetwerkstoffe sind bekannt und bestehen z. B. aus in Kunststoff eingebetteten Teilen einer Legierung, die im wesentlichen seltene Erden und Kobalt enthält (α-Magnet; IBS Ma-

gnet-Service, Berlin). Der vorgefertigte Anker 10 wird mit einer an den Aussendurchmesser des Oberteils 2 angepassten Innenbohrung versehen und nach der Vormagnetisierung beispielsweise durch Kleben unverschieblich an dem Oberteil 2 befestigt. Der Elektromagnet 11 ist von üblicher Bauart und kann, wie bekannt, mit Wechselstrom einer entsprechend dem jeweiligen Untersuchungszweck ausgewählten Charakteristik erregt werden. Unterhalb des Ankers 10 ist an dem Oberteil 2 ein Magnetkörper 12 im Inneren eines Positionssignalgebers 13 unverschieblich befestigt. Der Positionssignalgeber ist ein in üblicher Weise für solche Vorrichtungen verwendeter «LVDT» (Linear Variable Differential Transformer), der auf Positionsänderungen des Magnetkörpers 12 gegenüber dem Positionssignalgeber 13 anspricht und ein Messsignal erzeugt, das mittels einer (nicht gezeigten) Aufzeichnungsvorrichtung registriert wird. Wie in Fig. 1 angedeutet ist, sind der Elektromagnet 11 und der Positionssignalgeber 13 miteinander verbunden.

Während das Oberteil 2 des Belastungskörpers 1 mit den für die Durchführung der Messung wichtigen Einrichtungen zusammenwirkt, ist das Unterteil 3 zur Wechselwirkung mit der Probe 14 eingerichtet. Die Probe 14 des zu untersuchenden Materials befindet sich am Boden einer oben offenen Probenaufnahme 15. Das offene Ende der Probenaufnahme 15 ist mit einer Zuleitung 16 einer Begasungseinrichtung 17 verbunden, mit der die Luft aus der Probenaufnahme 15 verdrängt und durch jeweils gewünschte andere Gase ersetzt werden kann. Der Belastungskörper 1 liegt der Probe 14 mit dem freien Ende des Unterteils 3 auf. In die Probenaufnahme 15 ist weiterhin ein Thermoelement 18 eingeführt, das dicht an der Probe 14 angeordnet ist. Die Probenaufnahme 15 ist an ihrem geschlossenen Ende im Bereich der Probe 14 mit einer Heizwicklung 19 versehen, die an eine (nicht gezeigte) Stromquelle angeschlossen ist, und befindet sich in einer Ausnehmung eines einen Aluminiumblock 20 bildenden Wärmeableiters, der in einem Isoliergefäss 21 angeordnet ist, das ein Kältemittel, wie festes Kohlendioxyd oder flüssigen Stickstoff, enthält.

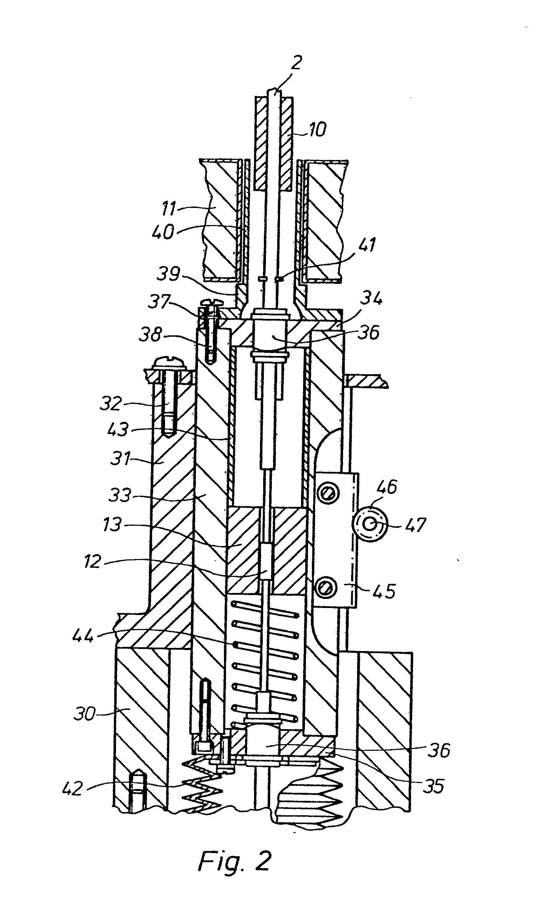

Fig. 2 zeigt den Aufbau der Messeinrichtung im einzelnen. Mit der Fig. 1 gleiche Teile sind darin mit gleichen Bezugszeichen versehen. In Fig. 2 ist die Vorrichtung im Bereich zwischen den Winkelarmen 6 und der Gewindekupplung 4 dargestellt, die beide ausserhalb der Abbildung liegen. Man erkennt im oberen Teil der Abbildung den Anker 10 am Oberteil 2 des Belastungskörpers 1 und am unteren Teil der Abbildung einen Teil eines die Vorrichtung einschliessenden Apparategehäuses 30. Mit dem Apparategehäuse 30 ist eine Führung 31 fest verbunden, die ihrerseits durch Schrauben 32 die Kammer 8 für den Tauchkörper 7 trägt, die in dieser Abbildung nicht dargestellt sind. In der Führung 31 ist ein längliches, zylindrisches Gehäuse 33 geführt, das an beiden Stirnseiten durch Verschlussplatten 34, 35 mit Durchführungen 36 für das Oberteil 2 geschlossen ist. An der oberen Verschlussplatte 34 ist ein Träger 37 mit Schrauben 38 befestigt. Der Träger 37 hat die Form einer Ringscheibe mit einer an die Durchführung 36 angepassten Mittelöffnung, von der ein Sockel 39 hochsteht, der ein hochstehendes Rohr 40 trägt. Der Aussendurchmesser des Rohres 40 ist an den Innendurchmesser der Mittelöffnung in dem Elektromagneten 11 angepasst, der der Stirnseite des Sockels 39 aufliegt. Das Oberteil 2 trägt in diesem Bereich einen Anschlagring 41, der die nach unten gerichtete Bewegung des Belastungskörpers 1 begrenzt. Die untere Verschlussplatte 35 ist mit dem Apparategehäuse 30 durch einen Faltenbalg 42 verbunden, der das Innere des Gehäuses 33 vor Verschmutzung schützt.

Innerhalb des Gehäuses 33 befindet sich der Positionssignalgeber 13, der den Magnetkörper 12 am Oberteil 2 umgibt und dessen Zu- und Ableitungen durch das Gehäuse 33 und die Führung 31 zu der (nicht gezeigten) Anschlussplatte am Apparategehäuse 30 geführt sind. Der Positionssignalgeber 13 liegt mit seiner oberen Stirnseite einem an der Innenwand des Gehäuses 33 angeordneten Anschlag 43 an, der in dem dargestellten Ausführungsbeispiel von einer in das Gehäuse 33 mit Passsitz eingepassten und innenseitig an die obere Verschlussplatte 34 stossenden Buchse gebildet wird. Mit der unteren Stirnseite liegt der Positionssignalgeber 13 einer Stützfeder 44 auf, die sich an der unteren Verschlussplatte 35 innenseitig abstützt.

Aussenseitig ist das Gehäuse 33 in einem Bereich, der die axiale Länge des Positionssignalgebers 13 übersteigt, mit einer achsparallel verlaufenden Zahnleiste 45 versehen, deren Zähnung nach aussen weist. Mit der Zahnleiste 45 befindet sich ein Ritzel 46 im Eingriff, das sich an einer senkrecht zur Papierebene bzw. Gehäuseachse verlaufenden Drehachse 47 befindet. Die Führung 31 enthält einen zu der Zahnleiste 45 ausgerichteten Längsschlitz und das Apparategehäuse 30 eine Durchführung für die Drehachse 47.

Die vorstehend beschriebene Vorrichtung arbeitet wie folgt:

Der durch die schwimmende Lagerung in der Kammer 8 von seinem Eigengewicht entlastete Belastungskörper 1 wird auf die in die Probenaufnahme 15 eingebrachte Probe 14 aufgesetzt, nachdem die Temperierung erfolgt ist und gegebenenfalls mit Hilfe der Begasungseinrichtung 17 die jeweils gewünschte Gasatmosphäre in der Probenaufnahme 15 eingestellt wurde. Vor der eigentlichen Messung wird eine Justierung an dem Positionssignalgeber 13 vorgenommen, indem das Gehäuse 33 mit Hilfe der Drehachse 47 und des in die Zahnleiste 45 eingreifenden Ritzel 46 verstellt wird. Das wird durch den Längsschlitz in der Führung 31 und die Durchführung für die Drehachse 47 im Apparategehäuse 30 ermöglicht. Das Gehäuse 33 wird gegenüber dem Belastungskörper 1 in der Führung 31 verschoben, bis die Anzeige der Aufzeichnungsvorrichtung ergibt, dass sich der Magnetkörper 12 in Nullage befindet. Gleichzeitig damit wird auch der Elektromagnet 11 verstellt, so dass für jede Messung sichergestellt ist, dass auch dieser und der Anker 10 jeder Messung die gleiche Ausgangsposition zueinander einnehmen wird. Die Messung kann dann in bekannter Weise durch statische oder dynamische Belastung durchgeführt werden, wobei jedoch ohne Zwischenjustierung von einer Belastungsart zur anderen übergegangen werden kann, unter Umständen sogar an der gleichen Probe 14.

**Patentansprüche**

1. Vorrichtung zur Durchführung thermomechanischer Analysen, bestehend aus einem in vertikaler Richtung geführten Belastungskörper (1) und einer Kompensationseinrichtung für dessen Eigengewicht, aus einer Probenaufnahme (15), in der der Belastungskörper (1) der zu untersuchenden Probe (14) aufliegt und die mit einer Begasungseinrichtung (17) versehen ist, aus einer Temperiereinrichtung für die Probenaufnahme (15), aus einem mit dem Belastungskörper (1) unverschieblich verbundenen Magnetkörper (12) und einem damit zusammenwirkenden elektromagnetischen Positionssignalgeber (13), der durch eine Justiereinrichtung in eine Nullage einstellbar ist und an dessen Ausgang ein der Auslenkung des Magnetkörpers (12) aus der Nullage entsprechendes Messsignal anliegt, aus einem mit dem Belastungskörper (1) verbundenen Teller (5) zur Aufnahme eines Gewichts zur statischen Belastung der Probe, einer mit dem Belastungskörper (1) kombinierbaren Einrichtung zur dynamischen Belastung der Probe, die aus einem an eine Wechselstromquelle anschliessbaren Elektromagneten (11) und einem Anker (10) besteht, und aus einer Aufzeichnungsvorrichtung zur Aufzeichnung der Messsignale als Funktion der Temperatur, dadurch gekennzeichnet, dass der Belastungskörper (1) schwimmend gelagert ist und der Anker (10) des Elektromagneten (11) unverschieblich mit dem Belastungskörper (1) verbunden ist, und dass der Anker (10) zwischen dem Magnetkörper (12) und Winkelarmen (6) an dem Belastungskörper (1) angeordnet ist und der Elektromagnet (11) in einer fixen Position in bezug auf den Positionssignalgeber (13), aber gemeinsam mit diesem justierbar angeordnet ist.

2. Vorrichtung nach Anspruch 1, dadurch gekennzeichnet, dass die schwimmende Lagerung aus mindestens einem mit dem Belastungskörper (1) verbundenen Tauchkörper (7) und einem Tauchbad für den Tauchkörper (7) besteht.

3. Vorrichtung nach Anspruch 2, dadurch gekennzeichnet, dass an dem Belastungskörper (1) zwischen dem Teller (5) und dem Positionssignalgeber (13) drei Winkelarme (6) vorgesehen sind, an deren freien Enden der Tauchkörper (7) angeordnet ist.

4. Vorrichtung nach Anspruch 2 oder 3, dadurch gekennzeichnet, dass das Tauchbad aus einer Kammer (8) mit einer Ölfüllung (9) besteht.

5. Vorrichtung nach Anspruch 4, dadurch gekennzeichnet, dass für jeden Tauchkörper (7) eine gesonderte Kammer (8) vorgesehen ist.

6. Vorrichtung nach einem der Ansprüche 1 bis 5, dadurch gekennzeichnet, dass ein längliches, an beiden Enden geschlossenes und darin mit Durchführungen (36) für den Belastungskörper (1) versehenes Gehäuse (33) für den Positionssignalgeber (13) vorgesehen ist und dass an dem der Probe (14) abgewandten Ende des Gehäuses (33) ein Träger (37) für den Elektromagneten (11) angebracht ist.

7. Vorrichtung nach Anspruch 6, dadurch gekennzeichnet, dass das Gehäuse (33) in einer Führung (31) gegenüber dem Positionssignalgeber (13) vertikal beweglich geführt ist und an seiner Aussenseite mit einer vertikal verlaufenden Zahnleiste (45) versehen ist, die durch einen Längsschlitz in der Führung (31) vorsteht und mit einem Ritzel (46) an einer senkrecht zu dem Gehäuse (33) verlaufenden Drehachse (47) im Eingriff ist.

8. Vorrichtung nach Anspruch 7, dadurch gekennzeichnet, dass das Gehäuse (33) gleitbeweglich gegenüber dem Positionssignalgeber (13) ist und dass der Positionssignalgeber (13) unter dem Druck einer Stützfeder (44), die sich an dem der Probe (14) zugekehrten Ende des Gehäuses (33) abstützt, in Anlage an einem in dem Gehäuse (33) ausgebildeten Anschlag (43) gehalten ist.

9. Vorrichtung nach einem der vorstehenden Ansprüche, dadurch gekennzeichnet, dass der Anker (10) aus einem vormagnetisierten Magnetwerkstoff besteht.

**Claims**

1. An apparatus for carrying-out thermo-mechanical analyses and containing a load member (1) guided in vertical direction and compensating means for compensating the weight of the load member, a sample receptable (15) in which the load member (1) bears upon the sample (14) to be investigated and which is provided with a gassing device (17) a temperature generating device for the sample receptable (15), a magnetic body (12) undisplaceably connected with the load member (1), an electromagnetic position signal transmitter (13) cooperating with the magnetic body, the position signal transmitter being adjustable to a zero position by an adjusting device and having an output to which a measuring signal is applied which corresponds to the deflection of the magnetic body (12) from the zero position, a plate (5) connected with the load member (1) for receiving a weight for statically loading the sample, a device for dynamically loading the sample and arranged to be combined with the load member (1), said device comprising an electromagnet (11) connectable to an a.c. source and an armature (10), and recording means for recording the measuring signals as a function of temperature, characterized in that the load member (1) is floatingly supported and the armature (10) of the electromagnet (11) is undisplaceably connected with the load member (1), and that the armature (10) is arranged between the magnetic body (12) and angled arms (6) at the load member (1), and the electromagnet (11) is arranged in a fixed position relative to the position signal transmitter (13), but adjustable conjointly therewith.

2. Apparatus as in Claim 1 characterized in that the floating support comprises at least one immersion member (7) connected to the load member and a container containing an immersion medium in which said immersion member is received.

3. Apparatus as in Claim 2 characterized in that the load member (1) is provided intermediate the plate (5) and the position signal transmitter (13) with three angled arms (6) at the free ends of which the immersion members (7) are disposed.

4. Apparatus as in Claim 2 or Claim 3 characterized in that the container forms a chamber (8) comprising on oil filling (9).

5. Apparatus as in Claim 4 characterized in that a separate chamber (8) is provided for each immersion member (7).

6. Apparatus as in anyone of the Claims 1 to 5 characterized in that an elongate housing (33) is provided for the position signal transmitter (13), said housing (33) being closed at both its ends and the ends being provided with passages (36) for the load member (1), and that a carrier (37) for the electromagnet (11) is attached to the end of the housing (33) which is remote from the sample (14).

7. Apparatus as in Claim 6 characterized in that the housing (33) is guided for vertical movement relative to the position signal transmitter by a guiding member (31) and is provided at its exterior face with a vertically extending rack member (45) protruding from said guiding member (31) through a longitudinal slot therein, said rack member (45) being in engagement with a pinion (46) provided on a rotatable shaft (47) extending normally with respect to said housing (33).

8. Apparatus as in Claim 7 characterized in that the housing (33) is slideably movable with respect to the position signal transmitter (13) and that said position signal transmitter (13) is held in abutment to a stop (43) formed within the housing (33) under the load of a supporting spring (44) which is supported at the end of said housing (33) which faces the sample (14).

9. Apparatus as in anyone of the preceding Claims characterized in that the armature (10) is made of a premagnetized magnetic material.

**Revendications**

1. Dispositif pour effectuer des analyses thermomécaniques, comprenant un corps de charge (1) guidé verticalement et un dispositif de compensation pour son poids propre, un récipient d'échantillon (15) dans lequel est situé le corps de charge (1) de l'échantillon à examiner (14) et qui est pourvu d'un dispositif de gazage (17), un dispositif de mise en température pour le récipient d'échantillon (15), un corps magnétique (12) relié de manière non-déplacable au corps de charge (1) et un capteur de signal de position (13) électromagnétique coopérant avec ce corps magnétique et ajustable par un dispositif d'ajustement dans une position zéro, et à la sortie duquel est appliqué un signal de mesure correspondant à la déviation du corps magnétique (12) de la position zéro, une assiette (5) reliée au corps de charge (1) appelé à recevoir un poids pour la charge statique de l'échantillon, un dispositif destiné à la charge dynamique de l'échantillon, qui peut être combiné avec le corps de charge (1) et qui est constitué d'un électro-aimant (11) raccordable à une source de courant alternatif et d'un noyau (10), et un dispositif d'enregistrement appelé à enregistrer les signaux de mesure comme fonction de la température caractérisé par le fait que le corps de charge (1) est supporté de manière à flotter, que le noyau de l'électro-aimant (11) est relié de manière non-déplacable au corps de charge (1), que le noyau (10) est disposé entre le corps magnétique (12) et des bras angulaires (6) sur le corps de charge (1), et que l'électro-aimant (11) est disposé dans une position fixe relativement au capteur de signal de position (13), mais de sorte à pouvoir être ajusté coinjointement avec celui.

2. Dispositif selon la revendication 1, caractérisé par le fait que le support flottant est constitué d'au moins un corps d'immersion (7) relié au corps de charge (1) et d'un bain d'immersion pour le corps d'immersion (7).

3. Dispositif selon la revendication 2, caractérisé par le fait que sur le corps de charge (1) entre l'assiette (5) et le capteur de signal de position (13) on a prévu trois bras angulaires (6) sur les extrémités libres desquels est disposé le corps d'immersion (7).

4. Dispositif selon la revendication 2 ou 3, caractérisé par le fait que le bain d'immersion est constitué d'une chambre (8) remplie d'huile (9).

5. Dispositif selon la revendication 4, caractérisé par le fait qu'on a prévu une chambre particulière (8) pour chaque corps d'immersion (7).

6. Dispositif selon l'une des revendications 1 à 5, caractérisé par le fait qu'on a prévu un boîtier (33) oblong pour le capteur de signal de position (13), qui est fermé aux deux extrémités et pourvu de passages (36) pour le corps de charge (1), et qu'un support (37) pour l'électro-aimant (11) est monté sur l'extrémité du boîtier (33) opposée à l'échantillon (14).

7. Dispositif selon la revendication 6, caractérisé par le fait que le boîtier (33) est guidé dans un guidage (31) de manière à pouvoir être déplacé verticalement par rapport au capteur de signal de position (13), et qu'il comprend sur sa surface extérieure une baguette de rive (45) s'étendant verticalement et saillant par une fente longitudinale dans le guidage (31) et engrenant un pignon (46) sur un axe de rotation (47) s'étendant verticalement au boîtier (33).

8. Dispositif selon la revendication 7, caractérisé par le fait que le boîtier (33) est mobil par glissement relativement au capteur de signal de position (13), et que le capteur de signal de position (13) est en contact avec une butée (43) formée dans le boîtier (33) sous la pression d'un ressort de support (44) qui est supporté par l'extrémité du boîtier (33) en face de l'échantillon (14).

9. Dispositif selon l'une des revendications ci-dessus, caractérisé par le fait que le noyau (10) est constitué d'une matière magnétique préma-gnétisée.

*Fig. 1*

Fig. 2